# EUROPEAN PATENT APPLICATION

(11) **EP 2 979 822 A2**
(43) Date of publication of application: **03.02.2016**
(21) Application number: 15178786.8
(22) Date of filing: 29.07.2015
(51) Int. Cl.: B25J 9/04, B25J 19/00

(54) **ROBOT**

(30) Priority: 29.07.2014 JP 2014153955
(71) Applicant: Kabushiki Kaisha Yaskawa Denki, Kitakyushu-shi, Fukuoka 806-0004 (JP)
(72) Inventor: TSUTSUMI, Shingo, Kitakyushu-shi, Fukuoka 806-0004 (JP); TANAKA, Kentaro, Kitakyushu-shi, Fukuoka 806-0004 (JP); ICHIBANGASE, Atsushi, Kitakyushu-shi, Fukuoka 806-0004 (JP)
(74) Representative: Viering, Jentschura & Partner mbB Patent- und Rechtsanwälte

(57) **Abstract**

A robot (10) includes: a base portion (11) to be installed on an installation surface; an arm portion (12) having a base end coupled to the base portion (11), the base end being rotatable around a rotation shaft (200) disposed approximately parallel to the installation surface; and a balancer (16) having one side rotatably coupled to the base portion (11) and another side rotatably coupled to the arm portion (12). The arm portion (12) includes a pair of arm constituting plates (121L, 121R) each coupled to the rotation shaft (200) and facing each other, and at least a part of the balancer (16) is arranged between the pair of arm constituting plates (121L, 121R). In this robot, the arm portion and peripheral members are less likely to interfere with each other.

## Description

### BACKGROUND

### 1. Technical Field

Embodiments of the disclosure relate to a robot.

### 2. Description of the Related Art

Typically, a robot includes a base portion that is installed on a floor surface or the like and an arm portion that is pivotably and swingably coupled to the base portion. By mounting an end effector for various works on the tip of the arm portion in the robot, the robot can be used for various works.

As such a robot, a robot that includes a balancer is known (for example, see JP-A-2012-148392). The balancer utilizes the restoring force of an extendable member including a spring, a fluid, or the like to reduce the load applied to, for example, a motor and/or a reducer when the arm portion is swung.

One side of the above-described balancer is rotatably coupled to the base portion. The other side of the balancer is rotatably coupled to the arm portion.

However, the above-described typical balancer is usually arranged along the side surface of the arm portion.

Accordingly, the width as the robot is increased. In addition, this configuration causes expansion and contraction of the balancer on the side surface of the arm portion. Thus, an unwanted moment load may be applied to, for example, a reducer that is disposed at the coupling part between the arm portion and the base portion, and the like.

Further, for example, in order to reduce the load caused when the arm portion in a standing state tilts forward, the coupling part on the base portion side coupled to the one side of the balancer is disposed lower than the rotation shaft at which the base end of the arm portion is supported.

With such a configuration, when the arm portion tilts forward, the balancer protrudes forward from the arm portion. Accordingly, the peripheral members present at the lower part of the robot and the arm portion may interfere with each other.

One aspect of the embodiments has been made in view of the above-described circumstances. An object according to one aspect of the embodiments is to provide a robot which is streamlined and downsized and in which an arm portion and peripheral members are less likely to interfere with each other.

### SUMMARY

A robot according to one aspect of embodiments includes: a base portion to be installed on an installation surface; an arm portion having a base end coupled to the base portion, the base end being rotatable around a rotation shaft disposed approximately parallel to the installation surface; and a balancer having one side rotatably coupled to the base portion and another side rotatably coupled to the arm portion. The arm portion includes a pair of arm constituting plates each coupled to the rotation shaft and facing each other, and at least a part of the balancer is arranged between the pair of arm constituting plates.

According to one aspect of the embodiments, a robot which is streamlined and downsized and in which an arm portion and peripheral members are less likely to interfere with each other can be provided.

### BRIEF DESCRIPTION OF THE DRAWINGS

Fig. 1 is a perspective view of a robot according to a first embodiment;
Fig. 2 is a front view of the robot illustrated in Fig. 1;
Fig. 3 is a left side view of the robot illustrated in Fig. 1;
Fig. 4 is a schematic explanatory view illustrating the operation of a balancer included in the robot illustrated in Fig. 1;
Fig. 5 is a schematic explanatory view illustrating the operation of a balancer included in a robot according to a modification;
Fig. 6 is a front view of a robot according to a second embodiment;
Fig. 7 is a right side view of the robot illustrated in Fig. 6;
Fig. 8 is a left side view of the robot illustrated in Fig. 6; and
Fig. 9 is an explanatory view of a balancer included in the robot illustrated in Fig. 6.

### DESCRIPTION OF THE EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Embodiments of the robot disclosed in this application will be described in detail with reference to the accompanying drawings. The following embodiments do not limit the technique of this disclosure.

### (First Embodiment)

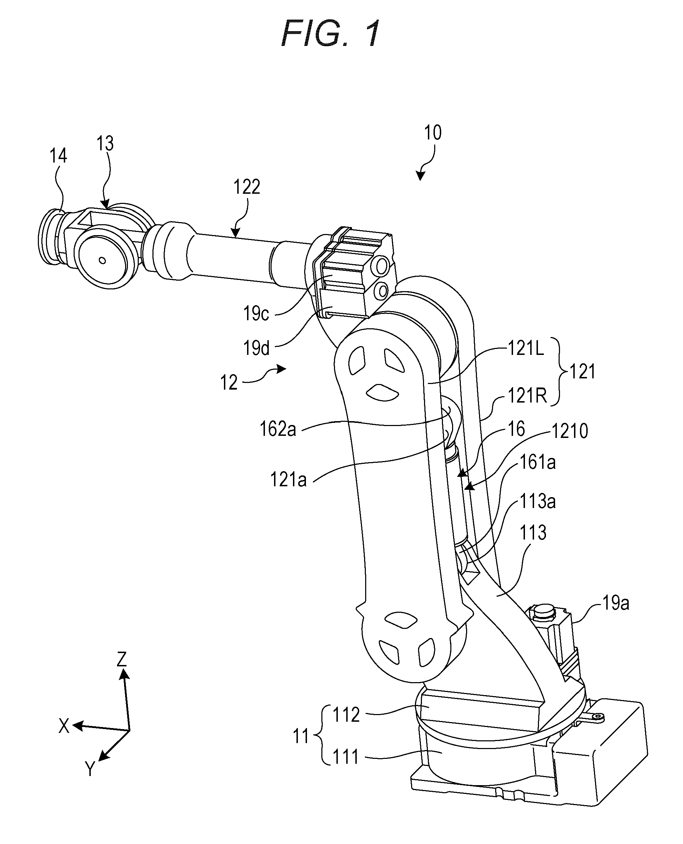

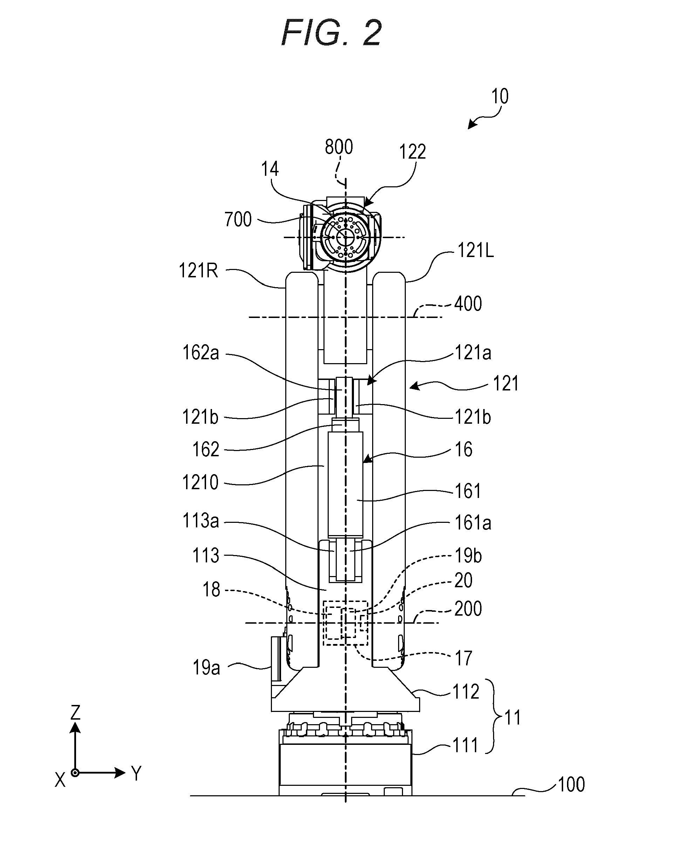

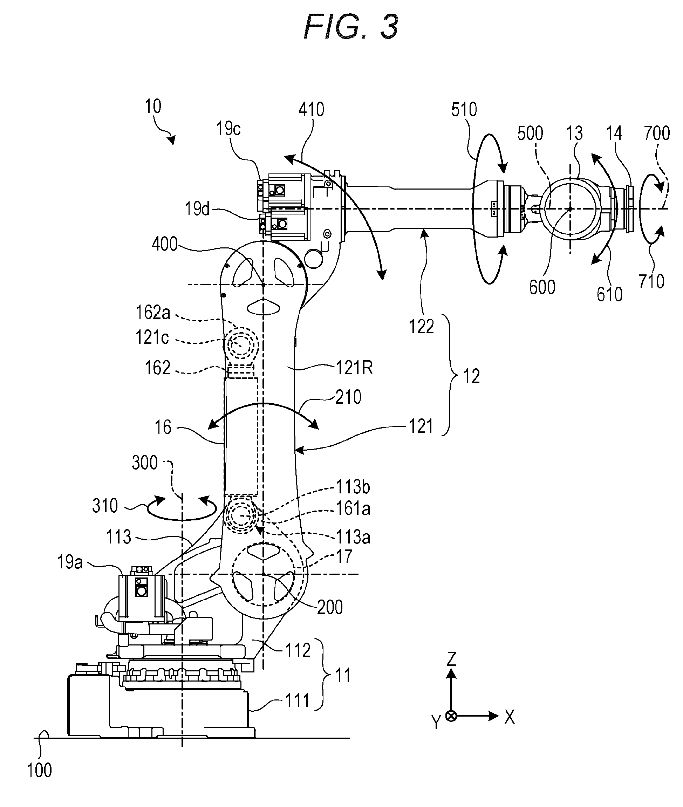

A description will be given of the configuration of a robot 10 according to a first embodiment with reference to Figs. 1 to 3. Fig. 1 is a perspective view of the robot 10 according to the embodiment. Fig. 2 is a front view of the robot 10. Fig. 3 is a left side view of the robot 10. For facilitating the description, a three-dimensional coordinate system including the Z-axis whose positive direction is the vertical upward direction is illustrated in each drawing. In this embodiment, the positive direction of the X-axis indicates the forward side of the robot 10.

The following describes a so-called perpendicular articulated robot as illustrated in Figs. 1 to 3 as an example. This robot is, for example, an industrial robot that performs painting work, welding work, workpiece handling work to hold a workpiece, or the like.

For convenience of explanation, the positional relationship, the operating directions, and the like of the respective portions in the robot 10 will be described below with reference to the posture of the robot 10 illustrated in Figs. 1 to 3.

As illustrated in the drawings, the robot 10 includes a base portion 11 and an arm portion 12. The base portion 11 is installed on a floor surface 100 (Figs. 2 and 3) as an installation surface. The base end of the arm portion 12 is coupled to the base portion 11 to be rotatable around a rotation shaft 200 approximately parallel to the floor surface 100 (see an arrow 210 in Fig. 3). The arm portion 12 includes a wrist portion 13 at its tip portion. The arm portion 12 includes a flange portion 14 at the tip portion of the wrist portion 13.

The base portion 11 is, for example, formed from cast metal or the like. The base portion 11 includes a base 111 that is installed on the floor surface 100, and a pivot base 112 that is rotatably disposed on the base 111. This pivot base 112 is rotatably coupled to the base 111 via a pivot shaft 300 disposed approximately perpendicular to the floor surface 100 (see an arrow 310 in Fig. 3). The power from a pivot motor 19a causes the pivot base 112 to pivot on the base 111 around the pivot shaft 300.

The arm portion 12 includes a lower arm 121 that is one example of a first arm, and an upper arm 122 that is one example of a second arm. The lower arm 121 is turnably coupled to the pivot base 112 via the rotation shaft 200. Here, the lower arm 121 swings back and forth around the rotation shaft 200 by the power from a turning motor 19b illustrated in Fig. 2.

The base end portion of the upper arm 122 is coupled to the tip portion of the lower arm 121 to be rotatable around a turning shaft 400 approximately parallel to the rotation shaft 200 (see an arrow 410 in Fig. 3). As illustrated in Fig. 3, the upper arm 122 is disposed to be twistable around a twisting shaft 500 approximately perpendicular to the turning shaft 400 (see an arrow 510 in the drawing). Here, the upper arm 122 also rotates by the power from a motor (not illustrated).

As illustrated in Fig. 3, the wrist portion 13 is coupled to the tip portion of the upper arm 122 to be swingable around a swinging shaft 600 approximately perpendicular to the twisting shaft 500 (see an arrow 610 in the drawing). Here, the wrist portion 13 swings back and forth around the swinging shaft 600 by the power from a twisting motor 19c illustrated in Figs. 1 and 3.

As illustrated in Figs. 2 and 3, the flange portion 14 is coupled to the wrist portion 13 to be rotatable around a rotation shaft 700 approximately perpendicular to the swinging shaft 600 (see an arrow 710 in Fig. 3). On this flange portion 14, various end effectors such as a spot welding gun, a paint nozzle, or a hand are mounted. Here, the flange portion 14 rotates around the rotation shaft 700 by the power from a rotating motor 19d illustrated in Figs. 1 and 3.

The lower arm 121 includes a left-side arm constituting plate 121L and a right-side arm constituting plate 121R. The left-side arm constituting plate 121L and the right-side arm constituting plate 121R are both coupled to the rotation shaft 200, and face each other. That is, the lower arm 121 includes a left-and-right pair of arm constituting plates 121L and 121R.

The robot 10 according to this embodiment includes a balancer 16 for gravity compensation. The balancer 16 has a cylinder portion 161 and a rod portion 162. In the cylinder portion 161, fluid such as nitrogen gas is enclosed. The rod portion 162 advances and retreats by the pressure of the fluid inside the cylinder portion 161. Incidentally, the fluid in the cylinder portion 161 is one example of the extendable member. As the fluid in the cylinder portion 161, another gas or liquid such as oil can be used instead of nitrogen gas or the like.

The balancer 16 according to this embodiment is a so-called PULL-type balancer. The balancer 16 is configured to reduce the drive load on the arm portion 12 while the rod portion 162 is retreating. That is, in the balancer 16, when the rod portion 162 has advanced, the rod portion 162 is biased in the contracting direction (retreating direction) by the fluid inside the cylinder portion 161. Accordingly, the total length of the balancer 16 in the initial state becomes shorter than that of a PUSH-type balancer configured to reduce the drive load on the arm portion 12 while a rod is advancing. This contributes to downsizing of the entire robot 10.

The balancer 16 is coupled to the base portion 11 by a first coupling part 161a that is disposed at the base end of the cylinder portion 161. Additionally, the balancer 16 is coupled to the arm portion 12 by a second coupling part 162a that is disposed at the tip of the rod portion 162. The first coupling part 161a and the second coupling part 162a are both formed in a ring shape.

More specifically, as illustrated in the drawings, the pivot base 112 of the base portion 11 includes a balancer mounting portion 113 that extends in the upper direction (the Z direction). The upper end of the balancer mounting portion 113 is formed to intervene between the left-side arm constituting plate 121L and the right-side arm constituting plate 121R in the lower arm 121. Here, the Z direction is the upper direction. More specifically, the Z direction is the normal direction of the installation surface (the floor surface 100).

At the upper end of the balancer mounting portion 113, a one-side coupling part 113a is disposed. The one-side coupling part 113a couples the first coupling part 161a that is disposed at the base end forming one side of the balancer 16. That is, in the lower arm 121, a balancer housing space 1210 is formed between the left-side arm constituting plate 121L and the right-side arm constituting plate 121R. The balancer mounting portion 113 is positioned in the balancer housing space 1210.

On the other hand, an other-side coupling part 121b is disposed in midway of the lower arm 121 (Fig. 2). The other-side coupling part 121b couples the second coupling part 162a that is disposed at the tip of the rod portion 162 forming the other side of the balancer 16. In this embodiment, a coupling member 121a, which couples the pair of arm constituting plates 121L and 121R, is disposed in midway of the lower arm 121. At this coupling member 121a, the other-side coupling part 121b is disposed.

As just described, the base portion 11 of the robot 10 according to this embodiment includes the one-side coupling part 113a. Accordingly, this one-side coupling part 113a is positioned on the tip side of the arm portion 12 with respect to the rotation shaft 200 at which the lower arm 121 of the arm portion 12 is rotatably supported. This one-side coupling part 113a couples the first coupling part 161a that is disposed at the base end side forming the one side of the balancer 16. In other words, the one-side coupling part 113a is formed at the position where the distance (installation length) to the one-side coupling part 113a from the installation surface in the normal direction (the Z direction) of the installation surface becomes longer than the installation length of the rotation shaft. That is, the base portion 11 includes the one-side coupling part 113a coupling the one side of the balancer 16 at the position where the one-side coupling part 113a has an installation length longer than that of the rotation shaft 200. On the other hand, the lower arm 121 of the robot 10 according to this embodiment has the other-side coupling part 121b. The other-side coupling part 121b couples the second coupling part 162a that is disposed on the tip side of the rod portion 162 forming the other side of the balancer 16.

The one-side coupling part 113a of the pivot base 112 is provided with a first shaft body 113b that extends approximately parallel to the rotation shaft 200. The first shaft body 113b pivotally supports the ring-shaped first coupling part 161a included in the balancer 16. On the other hand, the other-side coupling part 121b is similarly provided with a second shaft body 121c that extends approximately parallel to the rotation shaft 200. The second shaft body 121c pivotally supports the ring-shaped second coupling part 162a.

As just described, the entire balancer 16 according to this embodiment is arranged in the balancer housing space 1210 that is formed between the pair of arm constituting plates 121L and 121R. That is, as illustrated in Fig. 2, the balancer 16 is arranged to overlap with a robot center line 800 of the robot 10 in front view. This robot center line 800 is the center line passing through the center of a turning portion 17 in the axial direction.

Accordingly, the balancer 16 according to this embodiment allows reducing the width of the robot 10, for example, in front view. This allows contributing to downsizing of the robot 10.

Incidentally, as illustrated in Fig. 3, the one-side coupling part 113a of the pivot base 112 is disposed to be positioned on the pivot shaft 300 side of the pivot base 112 with respect to the robot center line 800 of the robot 10. On the other hand, the other-side coupling part 121b is positioned on the pivot shaft 300 side of the pivot base 112 with respect to the robot center line 800, similarly to the one-side coupling part 113a.

Accordingly, in side view, the balancer 16 is arranged on the pivot shaft 300 side of the pivot base 112 with respect to the robot center line 800 and between the rotation shaft 200 and the turning shaft 400 in the lower arm 121.

In such a manner, the balancer 16 is coupled to the base portion 11 and the arm portion 12 to stride between these portions. Additionally, at least a part of the balancer 16 is arranged between the pair of arm constituting plates 121L and 121R. The one-side coupling part 113a disposed at the base portion 11 is formed to extend between the pair of arm constituting plates 121L and 121R.

The base end side of the balancer 16 is rotatably coupled to the base portion 11. Additionally, the tip side of the balancer 16 is rotatably coupled to the arm portion 12. In the balancer 16 according to this embodiment as the PULL-type balancer, as illustrated in Figs. 2 and 3, the one-side coupling part 113a positioned on the base end side is always disposed at the upper position (the position separated in the Z direction as the coordinate axis in the drawing) with respect to the rotation shaft 200 at which the lower arm 121 is supported. Accordingly, while the details will be described later, (PULL-type) gravity compensation is performed using a restoring force when the lower arm 121 swings.

The rod portion 162 of the balancer 16 is preferred to be, for example, covered with an accordion cover member that expands and contracts to follow the advance and retreat of the rod. The cover member is effective to suppress the burning of the rod portion 162 due to sputtering or the like, for example, when the robot 10 is used for welding.

The robot 10 includes a rigging cable routed along the lower arm 121 (not illustrated). Here, the rigging cable includes a power supplying cable to the end effector and the respective motors, a hose, and the like.

In this embodiment, the balancer 16 is arranged between the left-side arm constituting plate 121L and the right-side arm constituting plate 121R. Accordingly, the rigging cable can be wired at any of the right and left sides of the lower arm 121 without interference with the balancer 16.

The base portion 11 of the robot 10 according to this embodiment includes the turning portion 17. The turning portion 17 has the rotation shaft 200 where the lower arm 121 of the arm portion 12 is supported at its both ends.

As illustrated in Figs. 2 and 3, the turning portion 17 is disposed inside the balancer mounting portion 113 on the base portion side in the pivot base 112. This turning portion 17 includes, for example, a reducer 18, the motor 19b, and a bearing 20. The reducer 18 is coupled to interlock with the shaft body (the rotation shaft 200) of the left-side arm constituting plate 121L. The motor 19b is coupled to interlock with the reducer 18. The bearing 20 bears the shaft body (the rotation shaft 200) of the left-side arm constituting plate 121L. As just described, the base portion of the lower arm 121 (the arm portion 12) including the left-side arm constituting plate 121L and the right-side arm constituting plate 121R is swingably mounted on the base portion 11 in the state where both ends are supported by the turning portion 17 (the rotation shaft 200). That is, the arm portion 12 is swingably mounted on the base portion 11 via a turning portion 17.

Incidentally, as described above, the balancer 16 is arranged between the pair of arm constituting plates 121L and 121R. The axis line of the balancer 16 is arranged to approximately overlap with the robot center line 800 of the robot 10 in front view (see Fig. 2). Accordingly, it is possible to reduce the offset amount with respect to the reducer 18 of the turning portion 17 as much as possible. As a result, the moment load applied to the reducer 18 can be reduced by the compression load of the balancer 16. Accordingly, it is possible to suppress the adverse effect on the reducer 18 due to the moment load as much as possible. Here, depending on the position of the reducer 18, the above-described offset amount can be set to zero or approximately zero. Accordingly, the moment load can also be set to zero or approximately zero. This allows reducing the possibility that the balancer 16 interferes with the turning portion 17.

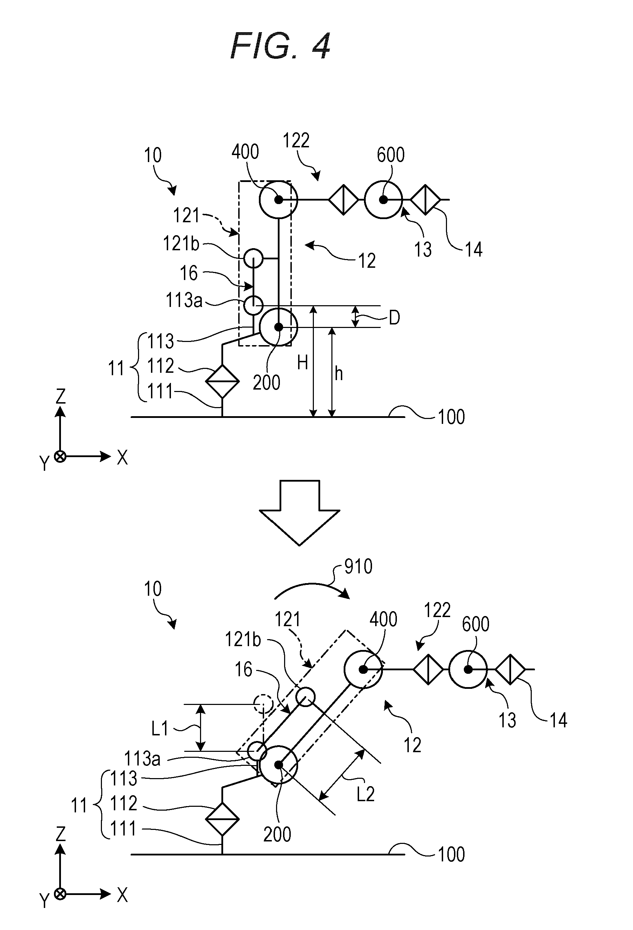

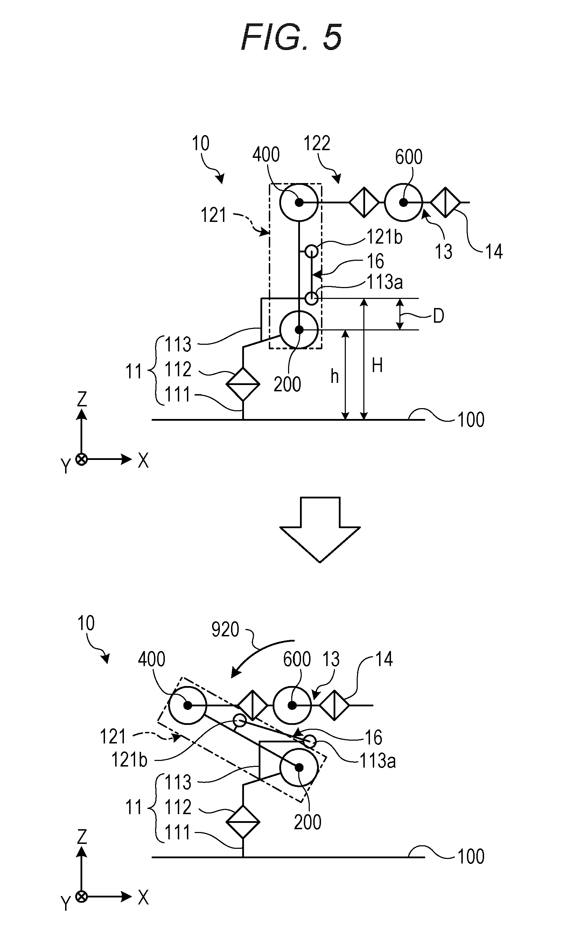

The following describes the operation of the balancer 16 with reference to Figs. 4 and 5. Fig. 4 is a schematic explanatory view illustrating the operation of the balancer 16 included in the robot 10 illustrated in Figs. 1 to 3. Fig. 5 is a schematic explanatory view illustrating the operation of the balancer 16 in the robot 10 according to a modification.

The robot 10 in the state where the lower arm 121 stands approximately perpendicularly is illustrated in the upper part of Fig. 4. The robot 10 in the state where the lower arm 121 is tilted obliquely forward is illustrated in the lower part of Fig. 4. The joint of the robot 10 and the like are schematically illustrated using graphic symbols. Additionally, in Fig. 4, the same reference numerals are assigned to substantially the same elements to those of the robot 10 illustrated in Figs. 1 to 3 as necessary. The robot 10 in the state where the lower arm 121 stands approximately perpendicularly is illustrated in the upper part of Fig. 5. The robot 10 where the lower arm 121 is tilted obliquely backward is illustrated in the lower part of Fig. 5. Similarly in Fig. 5, the joint of the robot 10 and the like are schematically illustrated using graphic symbols. Further, in Fig. 5, the same reference numerals are assigned to substantially the same elements to those of the robot 10 illustrated in Figs. 1 to 3 as necessary.

As illustrated in Fig. 4, the base end portion of the balancer 16 is coupled to the one-side coupling part 113a that is disposed at the balancer mounting portion 113 of the pivot base 112. The one-side coupling part 113a is arranged at the position where the height from the floor surface 100 is a first height H. The rotation shaft 200 of the lower arm 121 is arranged at the position where the height from the floor surface 100 is a second height *h*. Accordingly, the one-side coupling part 113a is at the position higher than that of the rotation shaft 200. That is, the one-side coupling part 113a is at the position closer to the upper arm 122 by a distance D than the rotation shaft 200.

Accordingly, when the lower arm 121 is tilted forward from the state illustrated in the upper part of Fig. 4 to the state illustrated in the lower part of Fig. 4 (see an arrow 910 in the drawing), the rod portion 162 (see Figs. 2 and 3) advances. As a result, the balancer 16 is extended from a first length L1, which is used as a reference, to a second length L2 after movement (L2 > L1).

Thus, when the arm portion 12 is tilted, the balancer 16 causes the force supporting the arm portion 12 due to the restoring force caused by pulling of the rod portion 162 to act on the arm portion 12. Thus, it is possible to tilt the arm portion 12 including the upper arm 122, which extends further forward from the tip of the lower arm 121 having a predetermined length, in a wider range. On the other hand, the rod portion 162 of the balancer 16, which advances due to pulling, is biased in the retreating direction. This allows reducing the drive load when the tilted arm portion 12 is driven to be in a standing state.

The balancer 16 is arranged between the pair of arm constituting plates 121L and 121R. Additionally, the balancer 16 is arranged on the pivot shaft 300 side of the pivot base 112 with respect to the robot center line 800 in side view. Accordingly, even in the case where, for example, some peripheral members are present at the lower part of the robot 10 when the arm portion 12 is tilted forward (in the X direction), these members and the arm portion 12 are less likely to interfere with one another.

Additionally, the balancer 16 is arranged between the pair of arm constituting plates 121L and 121R and between the rotation shaft 200 and the turning shaft 400. Accordingly, the balancer 16 can contribute to downsizing of the robot 10.

A description will be given of the case where the lower arm 121 is tilted not obliquely forward but obliquely backward as the movement of the arm portion 12 of the robot 10.

As illustrated in Fig. 5, also in this case, the balancer 16 is arranged in the balancer housing space 1210 that is formed between the pair of arm constituting plates 121L and 121R. In the base portion 11 of the robot 10, the one-side coupling part 113a is at the position closer to the upper arm 122 by the distance D than the rotation shaft 200. That is, the balancer 16 is arranged such that the base end of the balancer 16 is positioned above the rotation shaft 200. However, when the lower arm 121 is tilted obliquely backward, differently from Fig. 4, the balancer 16 is arranged on the wrist portion 13 side of the upper arm 122 with respect to the robot center line 800 in side view (see Fig. 2).

Accordingly, when the lower arm 121 is tilted backward from the state illustrated in the upper part of Fig. 5 to the state illustrated in the lower part of Fig. 5 (see an arrow 920 in the drawing), the rod portion 162 (see Figs. 2 and 3) advances.

Thus, when the arm portion 12 is tilted, the balancer 16 causes the force supporting the arm portion 12 due to the restoring force caused by pulling of the rod portion 162 to act on the arm portion 12. Thus, it is possible to tilt the arm portion 12 in a wide range. On the other hand, the rod portion 162 of the balancer 16, which advances due to pulling, is biased in the retreating direction. This allows reducing the drive load when the tilted arm portion 12 is driven to be in a standing state.

Even in this case, the balancer 16 is arranged between the pair of arm constituting plates 121L and 121R and between the rotation shaft 200 and the turning shaft 400. Accordingly, the balancer 16 can contribute to downsizing of the robot 10.

As described above, the robot 10 according to this embodiment can quickly change the posture of the arm portion 12 in a wide range without difficulty. This allows improving the efficiency for work using the robot 10.

Incidentally, the arrangement of the balancer 16 is not limited to the examples illustrated in Figs. 4 and 5. The balancer 16 only needs to be arranged at the position where the rod portion 162 can advance by a distance that ensures sufficient gravity compensation when the arm portion 12 is tilted. However, it is preferred that at least a part of the balancer 16 be arranged between the pair of arm constituting plates 121L and 121R and/or the one-side coupling part 113a coupling the one side of the balancer 16 be positioned on the tip side of the arm portion 12 with respect to the rotation shaft 200.

As described above, the robot 10 according to the first embodiment includes the base portion 11, the arm portion 12, and the balancer 16. The base portion 11 is installed on the installation surface such as the floor surface 100. The base end of the arm portion 12 is coupled to the base portion 11 to be rotatable around the rotation shaft 200 disposed approximately parallel to the installation surface. The one side of the balancer 16 is rotatably coupled to the base portion 11. The other side of the balancer 16 is rotatably coupled to the arm portion 12. The arm portion 12 (the lower arm 121) includes the pair of arm constituting plates 121L and 121R. The pair of the arm constituting plates 121L and 121R are both coupled to the rotation shaft 200 and face each other. At least a part of the balancer 16 is arranged between the pair of arm constituting plates 121L and 121R.

Thus, the robot 10, which is streamlined and downsized and in which the arm portion 12 and the peripheral members are less likely to interfere with each other, can be provided according to this embodiment.

Incidentally, the lower arm 121 only needs to be supported at its both ends and include the balancer housing space 1210. Accordingly, the shapes of the arm constituting plates 121L and 121R included in the lower arm 121 and the like may be changed as necessary. In this embodiment, the front and back surfaces of the lower arm 121 are opened. Instead, for example, the front surface of the lower arm 121 (the surface on the wrist portion 13 side of the upper arm 122) may be closed. In this case, the structure (shape) of the lower arm 121 has an approximately U shape in lateral cross-sectional view. The closed surface of the lower arm 121 is preferred to be the surface on the side far from the balancer 16.

Additionally, in this embodiment, the one-side coupling part 113a coupled to the one side of the balancer 16 is formed integrally with the pivot base 112. Furthermore, the one-side coupling part 113a is disposed at the balancer mounting portion 113 that intervenes between the left-side arm constituting plate 121L and the right-side arm constituting plate 121R. However, the one-side coupling part 113a only needs to be disposed at the base portion 11 side and positioned on the tip side of the arm portion 12 with respect to the rotation shaft 200. The other configuration of the one-side coupling part 113a may be changed as necessary.

As illustrated in Figs. 4 and 5, in this embodiment, the balancer 16 may be arranged on any of: the pivot shaft 300 side (back side) of the pivot base 112 with respect to the robot center line 800; and the wrist portion 13 side (front side) of the upper arm 122 with respect to the robot center line 800, in side view. It is preferable to determine whether the balancer 16 is arranged on the back side or on the front side corresponding to the tilting direction of the lower arm 121 (the arm portion 12). Specifically, when the lower arm 121 (the arm portion 12) is tilted obliquely forward, the balancer 16 is preferred to be arranged on the back side. On the other hand, when the lower arm 121 (the arm portion 12) is tilted obliquely backward, the balancer 16 is preferred to be arranged on the front side. Specifically, the balancer 16 is preferred to be arranged on the side opposite to the side where the lower arm 121 (the arm portion 12) is tilted with respect to the robot center line 800.

In this embodiment, the balancer 16 is arranged to overlap with the robot center line 800 of the robot 10 in front view. However, the position of the balancer 16 is not limited thereto. The balancer 16 is preferred to be arranged along the arm portion 12 so as to be close to the robot center line 800 of the robot 10.

### (Second Embodiment)

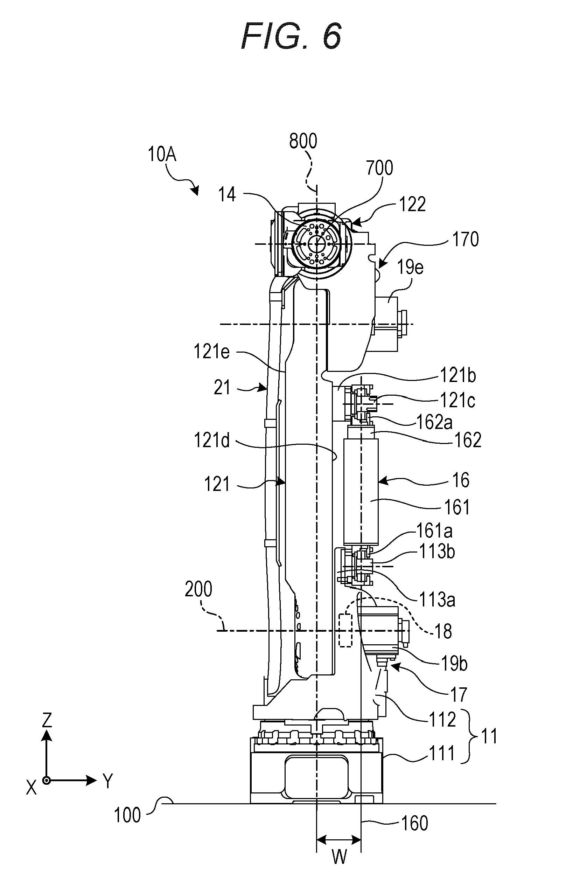

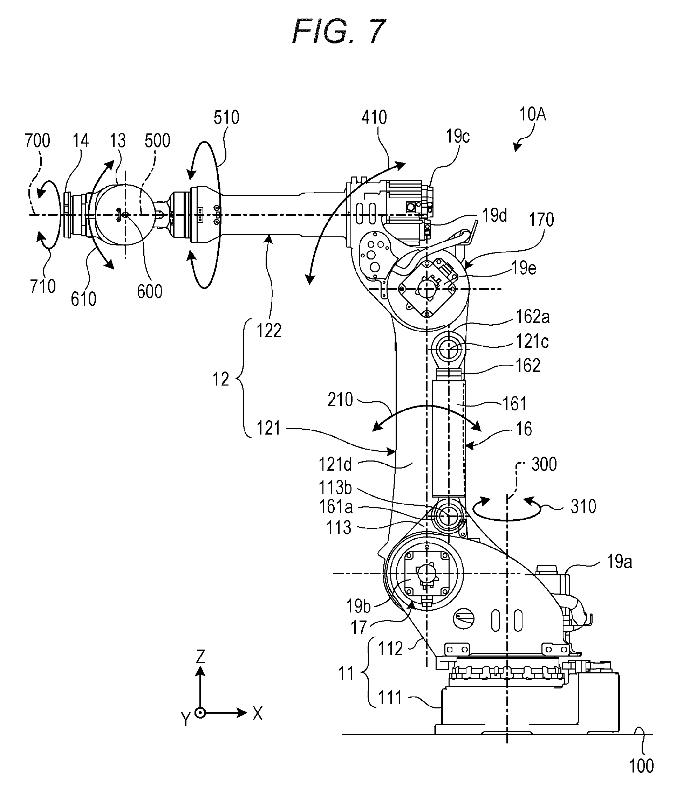

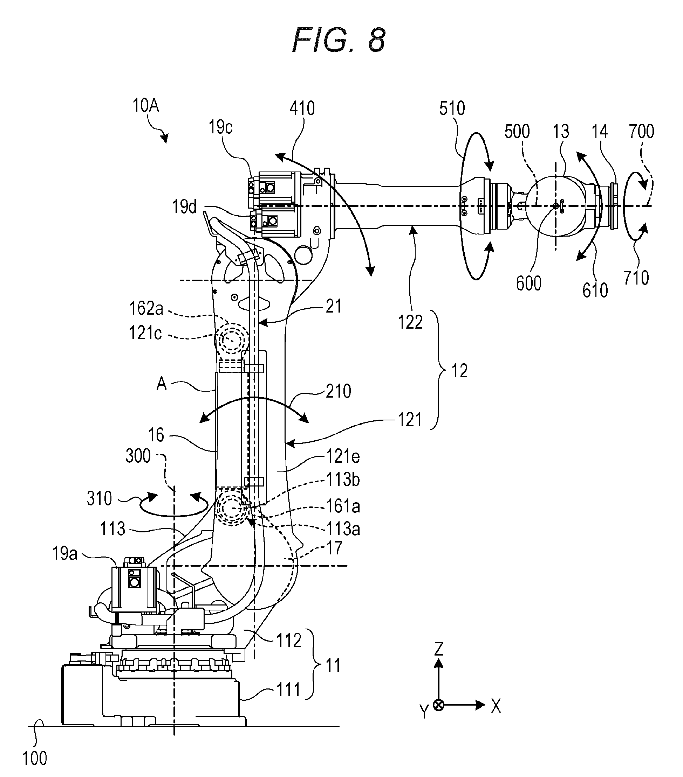

The following describes the configuration of a robot 10A according to a second embodiment with reference to Figs. 6 to 8. Fig. 6 is a front view of the robot 10A according to the second embodiment. Fig. 7 is a right side view of the robot 10A. Fig. 8 is a left side view of the robot 10A. Similarly to the first embodiment, for facilitating the description, a three-dimensional coordinate system including the Z-axis whose positive direction is the vertical upward direction is illustrated in each drawing. In this embodiment, the positive direction of the X-axis also indicates the forward side of the robot 10A.

The robot 10A according to this embodiment is a so-called perpendicular articulated robot, similarly to the embodiment described above. The robot 10A is, for example, an industrial robot that performs painting work, welding work, workpiece handling work to hold a workpiece, or the like. The positional relationship, the operating directions, and the like of the respective portions in the robot 10A will be described with reference to the posture of the robot 10A illustrated in Figs. 6 to 8.

The robot 10A according to this embodiment and the robot 10 according to the first embodiment described above are different in the configuration of the pivot base 112 of the base portion 11, the configuration of the lower arm 121 of the arm portion 12, and the mounting position of the balancer 16. Hereinafter, the same reference numerals to those in the first embodiment are assigned to elements of the robot 10A with substantially the same functions to those of the robot 10. Furthermore, the following mainly describes the configurations different from the first embodiment. The descriptions of common configurations are omitted as necessary.

As illustrated in the drawings, the lower arm 121 of the robot 10A has a single arm coupled to the rotation shaft 200. Specifically, the lower arm 121 includes a single arm cantilevered by the turning portion 17 that has the reducer 18 and the turning motor 19b. As illustrated in Fig. 6, the base portion of a left side surface 121d of the lower arm 121 is swingably coupled to the pivot base 112 via the rotation shaft 200 approximately parallel to the floor surface 100.

On the other hand, the upper arm 122 is swingably coupled to the tip portion of the left side surface 121d via the turning portion 170 that has a driving motor 19e and the like.

As illustrated in Figs. 6 to 8, the PULL-type balancer 16 is mounted along the side surface at one side of the lower arm 121, that is, the left side surface 121d facing the turning portion 17. Similarly to the embodiment described above, the balancer 16 is of a PULL type and thus is comparatively shorter in length than a PUSH-type balancer. As illustrated in the drawings, the balancer 16 is compactly housed in the vicinity of the center of the left side surface 121d of the lower arm 121.

As illustrated in Fig. 6, in the robot 10A, the pivot base 112 of the base portion 11 has an asymmetric shape with respect to the robot center line 800. The right side (the Y direction side) of the pivot base 112 is extended upward, and the turning portion 17 is disposed at this extended portion. This turning portion 17 houses the reducer 18, and includes the turning motor 19b coupled to interlock with this reducer 18.

The upper-side portion of the turning portion 17 in the pivot base 112 is extended further upward, and the plate-shaped one-side coupling part 113a is disposed at this extended portion. That is, the base portion 11 includes the one-side coupling part 113a on the tip side of the arm portion 12 with respect to the rotation shaft 200. The robot 10A according to this embodiment is installed on the floor surface 100. Accordingly, the one-side coupling part 113a coupling the first coupling part 161a of the balancer 16 is disposed higher than that of the rotation shaft 200.

As just described, the one-side coupling part 113a is disposed in the lower part of the left side surface 121d of the lower arm 121 and at the position close to the turning portion 17. On the other hand, in the upper part of the left side surface 121d of the lower arm 121 and at the position close to the turning portion 170 that causes the upper arm 122 to swing, the other-side coupling part 121b coupling the second coupling part 162a of the balancer 16 is disposed.

This configuration allows compactly housing the balancer 16 in the vicinity of the center of the left side surface 121d of the lower arm 121, while avoiding interference of the balancer 16 with the turning portion 17 and protrusion of the balancer 16 from the whole outer edge of the robot 10A in front view.

On the other hand, in the robot 10A according to this embodiment, a rigging cable 21 is routed on a right side surface 121e on the side opposite to the left side surface 121d of the lower arm 121. The rigging cable 21 includes a power supplying cable to the end effector and the respective motors in the arm portion 12, a hose, and the like. That is, the rigging cable 21 is used for driving the arm portion. Usually, there are no large parts and the like on the right side surface 121e. Accordingly, as illustrated in Fig. 8, the rigging cable 21 can be routed without difficulty.

In such a manner, using both the side surfaces 121d and 121e of the lower arm 121, the balancer 16 and the rigging cable 21 are arranged independently from each other. Specifically, the balancer 16 and the rigging cable 21 are arranged on the respective different side surfaces 121d and e in the lower arm 121. Accordingly, as illustrated in Fig. 6, the width of the robot 10A can be reduced in front view.

As a result, the one-side coupling part 113a is arranged close to the reducer 18. Accordingly, in the balancer 16 according to this embodiment, as illustrated in Fig. 6, an axis line 160 of the balancer 16 is close to the robot center line 800 that passes through the center of the turning portion 17 in the axial direction. That is, a distance W between the axis line 160 of the balancer 16 and the robot center line 800 that passes through the center the turning portion 17 in the axial direction becomes small as much as possible. Specifically, the balancer 16 is arranged along the arm portion 12 such that the axis line 160 of the balancer 16 and the robot center line 800 becomes close to each other.

This configuration allows reducing the offset amount between the reducer 18 arranged close to the left side surface 121d of the lower arm 121 and the axis line 160 of the balancer 16. Accordingly, similarly to the first embodiment, the moment load applied to the reducer 18 can be reduced by the compression load of the balancer 16 in the second embodiment. Thus, it is possible to suppress the adverse effect on the reducer 18 due to the moment load as much as possible.

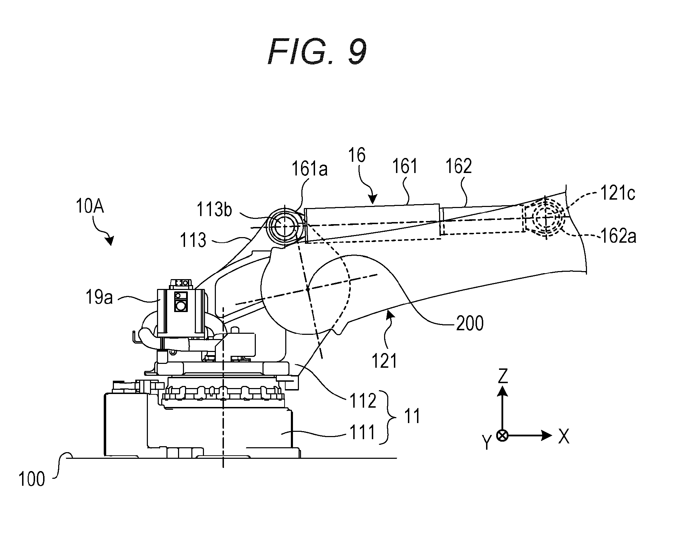

A description will be given of the operation of the balancer 16 included in the robot 10A according to this embodiment. Fig. 9 is an explanatory view of the balancer 16 included in the robot 10A. The balancer 16 is of a PULL-type similarly to the embodiment described above. Accordingly, as illustrated in Fig. 9, when the lower arm 121 is tilted forward, the rod portion 162 advances.

The force supporting the arm portion 12 due to the restoring force caused by pulling of the rod portion 162 acts on the arm portion 12. Accordingly, it is possible to tilt the arm portion 12 in a wide range. On the other hand, the rod portion 162 of the balancer 16, which advances due to pulling, is biased in the retreating direction. This allows reducing the drive load when the tilted arm portion 12 is driven to be in a standing state.

As described above, the robot 10A according to this embodiment includes: the base portion 11; the arm portion 12 that has the base end rotatably coupled to the base portion 11 via the rotation shaft 200 disposed approximately horizontally; and the balancer 16 that has one side rotatably coupled to the base portion 11 and the other side rotatably coupled to the arm portion 12. The robot 10A includes the one-side coupling part 113a that is positioned on the tip side of the arm portion 12 with respect to the rotation shaft 200 in the base portion 11 and couples the one side of the balancer 16.

Thus, the arrangement of the balancer 16 that contributes to downsizing of the robot 10A can be provided according to this embodiment. Additionally, the robot 10A where the arm portion 12 and the peripheral members such as the balancer 16 are less likely to interfere with each other can be provided.

Incidentally, in this embodiment, the one-side coupling part 113a coupling the one side of the balancer 16 is disposed at the upper-side portion of the turning portion 17 in the pivot base 112. However, the one-side coupling part 113a only needs to be disposed on the base portion 11 side and positioned on the tip side of the arm portion 12 with respect to the rotation shaft 200. The other configuration of the one-side coupling part 113a may be changed as necessary.

Incidentally, in this embodiment, the balancer 16 is arranged on the pivot shaft 300 side of the pivot base 112 with respect to the robot center line 800 in side view. However, the position of the balancer 16 is not limited thereto. The balancer 16 may be arranged at the wrist portion 13 side of the upper arm 122 with respect to the robot center line 800 (see Fig. 2) insofar as the one-side coupling part 113a coupling the one side of the balancer 16 is positioned on the tip side of the arm portion 12 with respect to the rotation shaft 200. That is, the balancer 16 is preferred to be arranged on the side opposite to the tilting side of the lower arm 121 (the arm portion 12) in side view along the side surface (such as the left side surface 121d) on one side of the lower arm 121.

According to the embodiments described above, a robot that includes the following respective means is provided. Specifically, the robot includes: means for installing; means for working that is rotatably cantilevered by the means for installing and performs a predetermined work; and means for compensating gravity that is disposed to stride between the means for installing and the means for working. The means for installing includes means for coupling one side on the tip side of the means for working with respect to means for supporting. The means for coupling one side couples one side of the means for compensating gravity. The means for supporting rotatably supports the means for working.

Additionally, a robot that includes the following respective means is also provided. Specifically, the robot includes: means for installing; means for working that is rotatably supported at its both ends by the means for installing via means for supporting and performs a predetermined work; and means for compensating gravity that is disposed to stride between the means for installing and the means for working. The means for working includes means for housing that houses at least a part of the means for compensating gravity.

Here, the above-described means for installing corresponds to the base portion 11. The above-described means for working corresponds to the arm portion 12 coupled to the wrist portion 13 having the flange portion 14. The means for compensating gravity corresponds to the balancer 16. The means for supporting corresponds to the rotation shaft 200. Furthermore, the means for coupling one side corresponds to the balancer mounting portion 113. The means for housing corresponds to the balancer housing space 1210.

As the respective motors 19a to 19d used in the respective embodiments described above, servo motors can be preferably used.

In the above-described embodiments, the balancer 16 is of a cylinder type, which has the cylinder portion 161 that encloses the fluid and the rod portion 162 that advances and retreats by the pressure of the fluid. Instead, the balancer 16 may be of a spring type, which has a tension spring or the like.

In the above-described embodiments, a multi-axis robot with six axes is described as an example. However, the number of axes of the robot according to the embodiments of this disclosure is not limited to six. For example, the robot according to the embodiments of this disclosure may be a 7-axis robot.

In the above-described embodiments, a single arm robot is described as an example. However, the number of arms of the robot according to the embodiments of this disclosure is not limited to one. For example, the above-described embodiments may be applied to at least any arm of a multi-arm robot that is at least a dual-arm robot.

Additional advantages and modifications will readily occur to those skilled in the art. Therefore, the disclosure in its broader aspects is not limited to the specific details and representative embodiments shown and described herein. Accordingly, various modifications may be made without departing from the spirit or scope of the general inventive concept as defined by the appended claims and their equivalents.

The robot according to the embodiments of this disclosure may be the following first to eighth robots.

A first robot includes: a base portion to be installed on an installation surface; an arm portion where a base end is coupled to the base portion to be rotatable around a rotation shaft disposed approximately parallel to the installation surface; a balancer where one side and another side are respectively rotatably coupled to the base portion and the arm portion. The arm portion includes a pair of arm constituting plates each coupled to the rotation shaft. The arm constituting plates face each other. At least a part of the balancer is arranged between the pair of arm constituting plates.

In a second robot according to the first robot, a one-side coupling part coupled to the one side of the balancer is positioned on a tip side of the arm portion with respect to the rotation shaft.

In a third robot according to the first or second robot, the balancer includes a rod portion configured to advance and retreat by an extendable member. The balancer is configured to reduce a drive load on the arm portion when the rod portion retreats.

In a fourth robot according to the third robot, the balancer further includes a cylinder portion enclosing fluid as the extendable member to cause the rod portion to advance and retreat by a pressure of the fluid.

In a fifth robot according to any one of the second to fourth robots, the one-side coupling part coupling the one side of the balancer is disposed at the base portion.

In a sixth robot according to the fifth robot, the one-side coupling part disposed at the base portion is formed to extend between the pair of arm constituting plates.

A seventh robot according to any one of the first to sixth robots includes a coupling member that couples the pair of arm constituting plates. An other-side coupling part coupling the other side of the balancer is disposed at the coupling member.

In an eighth robot according to any one of the first to seventh robots, the base portion includes: a base to be installed on the installation surface; and a pivot base that has the one-side coupling part and is rotatably disposed on the base portion via a pivot shaft disposed approximately perpendicular to the installation surface. The arm portion includes a first arm and a second arm coupled to a tip of the first arm. The first arm has the pair of arm constituting plates and has an other-side coupling part coupling the other side of the balancer. The first arm is turnably coupled to the pivot base via the rotation shaft.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A robot (10), **characterized by**:
a base portion (11) to be installed on an installation surface;
an arm portion (12) having a base end coupled to the base portion (11), the base end being rotatable around a rotation shaft (200) disposed approximately parallel to the installation surface; and
a balancer (16) having one side rotatably coupled to the base portion (11) and another side rotatably coupled to the arm portion (12), wherein
the arm portion (12) includes a pair of arm constituting plates (121L, 121R) each coupled to the rotation shaft (200), the arm constituting plates (121L, 121R) facing each other, and
at least a part of the balancer (16) is arranged between the pair of arm constituting plates (121L, 121R).

2. The robot (10) according to claim 1, further comprising
a one-side coupling part (113a) positioned on a tip side of the arm portion (12) with respect to the rotation shaft (200), the one-side coupling part (113a) coupling the one side of the balancer (16).

3. The robot (10) according to claim 2, wherein
the one-side coupling part (113a) is disposed at the base portion (11).

4. The robot (10) according to claim 3, wherein
the one-side coupling part (113a) is formed to extend between the pair of arm constituting plates (121L, 121R).

5. The robot (10) according to any one of claims 1 to 4, wherein
the balancer (16) includes a rod portion (162) configured to advance and retreat by an extendable member, the balancer (16) being configured to reduce a drive load on the arm portion (12) while the rod portion (162) retreats.

6. The robot (10) according to claim 5, wherein
the balancer (16) further includes a cylinder portion (161) enclosing fluid as the extendable member, and
the rod portion (162) is configured to advance and retreat by a pressure of the fluid.

7. The robot (10) according to any one of claims 1 to 6, further comprising:
a coupling member (121a) that couples the pair of arm constituting plates (121L, 121R); and
an other-side coupling part (121b) disposed at the coupling member (121a), the other-side coupling part (121b) coupling the other side of the balancer (16).

8. The robot (10) according to any one of claims 2 to 4, wherein
the base portion (11) includes:
a base (111) to be installed on the installation surface; and
a pivot base (112) that has the one-side coupling part (113a) and is rotatably disposed on the base portion (11) via a pivot shaft (300) disposed approximately perpendicular to the installation surface, and
the arm portion (12) includes:
a first arm (121) that has the pair of arm constituting plates 121L, 121R) and has an other-side coupling part (121b) coupling the other side of the balancer (16), the first arm (121) being turnably coupled to the pivot base via the rotation shaft (200); and
a second arm (122) coupled to a tip of the first arm (121).

9. The robot (10) according to claim 8, wherein
the balancer (16) includes a rod portion (162) configured to advance and retreat by an extendable member, the balancer (16) being configured to reduce a drive load on the arm portion (12) while the rod portion (162) retreats.

10. The robot (10) according to claim 9, wherein
the balancer (16) further includes a cylinder portion (161) enclosing fluid as the extendable member, and
the rod portion (162) is configured to advance and retreat by a pressure of the fluid.

11. The robot (10) according to claim 8, further comprising
a coupling member (121a) that couples the pair of arm constituting plates (121L, 121R), and
the other-side coupling part (121b) is disposed at the coupling member (121a).

12. The robot (10) according to claim 5 or 6, further comprising
a turning portion (17) having the rotation shaft (200), wherein
the arm portion (12) is swingably mounted on the base portion (11) via the turning portion (17), and
the balancer (16) is arranged along the arm portion (12) such that an axis line of the balancer (16) and a center line (800) becomes close to each other, the center line (800) passing through a center of the turning portion (17) in an axial direction.

13. The robot (10) according to claim 12, wherein
the balancer (16) is arranged on a side opposite to a tilting side of the arm portion (12) with respect to the center line (800) passing through the center of the turning portion (17) in the axial direction.
